**Europäisches Patentamt**

**European Patent Office**

**Office européen des brevets**

(19)

(11) Numéro de publication : **0 362 084 B1**

(12)

# FASCICULE DE BREVET EUROPEEN

(45) Date de publication du fascicule du brevet :
**11.03.92 Bulletin 92/11**

(51) Int. Cl.$^5$ : **C04B 41/49, B28D 1/02**

(21) Numéro de dépôt : **89420350.4**

(22) Date de dépôt : **15.09.89**

(54) **Procédé d'hydrofugation des matériaux de carrière au moyen d'une émulsion silicone.**

(30) Priorité : **15.09.88 FR 8812304**

(43) Date de publication de la demande :
**04.04.90 Bulletin 90/14**

(45) Mention de la délivrance du brevet :
**11.03.92 Bulletin 92/11**

(84) Etats contractants désignés :
**AT BE CH DE ES FR GB GR IT LI LU NL SE**

(56) Documents cités :
**EP-A- 0 084 966
BE-A- 697 294
US-A- 2 829 035
CHEMICAL ABSTRACTS, vol. 100, no. 24, juin
1984, page 309, résumé no. 196906a, Columbus, Ohio, US**

(73) Titulaire : **RHONE-POULENC CHIMIE
25, quai Paul Doumer
F-92408 Courbevoie Cédex (FR)**

(72) Inventeur : **Bouillard, Gérard
35, Boulevard Pasteur
F-75015 Paris (FR)**
Inventeur : **Chauffriat, Henri
50, rue Joliot Curie Bt 1C
F-69005 Lyon (FR)**

(74) Mandataire : **Fabre, Madeleine-France et al
RHONE-POULENC CHIMIE Direction des
Brevets Secteur Spécialités Chimiques 25,
quai Paul-Doumer
F-92408 Courbevoie Cédex (FR)**

EP 0 362 084 B1

Jouve, 18, rue Saint-Denis, 75001 PARIS

## Description

La présente invention concerne un procédé d'hydrofugation des matériaux de carrière, lors de leur découpe par sciage, au moyen d'une émulsion silicone.

Une hydrofugation efficace des matériaux utilisés dans l'industrie du bâtiment, en particulier les matériaux dont tout ou partie des surfaces doivent subir les intempéries, est devenue une nécessité. En effet, l'action de l'eau de pluie combinée aux agents chimiques liés à la pollution atmosphérique, est la cause de détériorations diverses de ces matériaux.

Parmi ces détériorations, les plus connues sont les suivantes:
– taches d'humidité,
– efflorescences de sels minéraux,
– pénétration de l'eau à l'intérieur du matériau, gel de cette eau et érosion du matériau par éclatement,
– poussées de mousse,
– salissures,
– corrosion chimique.

Les émulsions silicones sont utilisées depuis longtemps et avec succès pour l'hydrofugation des divers matériaux utilisés dans le bâtiment, tels que le béton, le plâtre, le bois, les briques, les tuiles en terre cuite, etc... L'émulsion est soit appliquée en surface, soit, quand cela est possible, introduite dans la masse du matériau lors de sa fabrication comme par exemple pour le béton.

Il est cependant bien connu qu'il est difficile d'obtenir une hydrofugation efficace des matériaux de construction naturels issus de carrières et obtenus par sciage, tels que pierres de taille, plaques de pierres pour dallage ou revêtement extérieur de parement, blocs et plaques de marbre, etc...

Comme il ressort des exemples comparatifs de la présente demande, on n'obtient pas une hydrofugation convenable de ces matériaux au moyen d'une émulsion silicone même en déposant des quantités importantes de silicones par unité de surface.

La présente invention a permis de résoudre ce problème. Elle concerne, en effet, un procédé d'hydrofugation de matériaux extraits de carrière obtenus par sciage selon lequel on découpe les matériaux avec introduction d'eau, lors du sciage, dans la zone de coupe, caractérisé en ce que l'eau comporte une quantité efficace d'une émulsion silicone hydrofugeante.

Les matériaux en question sont découpés à la dimension désirée, à partir de blocs extraits de la carrière au moyen de scies munies d'une ou plusieurs lames à mouvement continu ou alternatif actionnées par un moteur.

En vue de refroidir la lame de la scie et de faciliter la découpe, on apporte en continu sur la lame de la scie elle-même et/ou dans la zone de découpe de l'eau.

De façon surprenante et inattendue, on a trouvé, conformément à la présente invention que l'addition à cette eau lors de la découpe, d'une quantité efficace d'émulsion silicone hydrofugeante, permet d'obtenir un matériau parfaitement hydrofugé.

Un premier avantage tout à fait important du procédé de l'invention est que l'on obtient une hydrofugation parfaite avec une quantité de silicone déposée à la surface du matériau (calculé en extraits secs) comprise entre 1 et 50 g/m$^2$, des quantités comprises entre 2 et 20 g/m$^2$ donnant d'excellents résultats.

L'hydrofugation du matériau obtenue par le procédé conventionnel de dépose de l'agent silicone hydrofugeant sous la forme d'une émulsion ou en solution dans un solvant organique, est de bien moins bonne qualité à quantité de silicone déposée égale ou même très supérieure.

Sans vouloir limiter l'invention à une explication scientifique, on peut penser que le traitement hydrofuge par le procédé de l'invention est appliqué à toutes les surfaces du matériau.

En outre, lors de la découpe, le matériau est totalement imprégné par l'eau dopée par l'émulsion additivée, la pénétration de cette eau étant accentuée par l'effet mécanique des lames de scie qui force le mélange à pénétrer jusque dans les plus fins capillaires du matériau.

La répartition de l'agent silicone hydrofugeant est de ce fait meilleure et est réalisée plus profondément à l'intérieur du matériau, bien que la dose de silicone puisse être quantitativement beaucoup plus faible que la dose habituellement utilisée dans les procédés conventionnels d'hydrofugation.

Un dernier avantage du procédé de l'invention est qu'il permet de réaliser en une seule opération la découpe et l'hydrofugation du matériau.

L'émulsion silicone peut être incorporée à l'eau dans un réservoir, puis l'eau additivée est injectée dans la zone de découpe. Une autre méthode consiste à amener séparément l'émulsion silicone et l'eau à la zone de découpe et d'opérer le mélange in situ.

Les quantités d'agents silicones hydrofugeants déposées par m$^2$ de surface dépendent bien entendu des quantités d'eau utilisées lors de la découpe et surtout de la porosité du matériau découpé à traiter. Plus le maté-

2

riau est poreux (présence de beaucoup de capillaires), plus les quantités nécessaires pour obtenir une hydrofugation convenable sont importantes. L'utilisation de 0,1 à 10 parties en poids d'émulsion silicones comportant de 5 à 60 % en poids d'extraits secs pour 100 parties d'eau permet d'aboutir aux quantités visées suffisantes pour obtenir une hydrofugation efficace.

Toute émulsion silicone hydrofugeante, de préférence spécialement adaptée à l'hydrofugation des matériaux pour bâtiment, est utilisable.

Ces émulsions sont bien connues. Elles sont disponibles dans le commerce et leurs divers procédés d'obtention sont abondamment décrits dans la littérature. On peut en particulier utiliser les émulsions de résines silicones, les émulsions d'organosiliconates de métaux alcalins, les émulsions d'alkyltrialcoxysilanes et les émulsions de polydiorganosiloxanes éventuellement porteurs de radicaux organiques fonctionnels.

Les émulsions de résines silicones peuvent comporter une résine ou des mélanges de résines présentant des motifs choisis parmi $R_3SiO_{0,5}$, $R_2SiO$, $RSiO_{1,5}$ et $SiO_2$, R étant un radical alkyle en $C_1$-$C_6$ comme par exemple décrites dans EP-A-178 191, US-A-4 525 502 et US-A-4 717 599, certains des radicaux R pouvant être des radicaux alcoxy en $C_1$-$C_6$ comme par exemple décrites dans EP-A-130 521, EP-A-157 323 et US-A-3 650 852.

Les émulsions d'organosiliconates de métaux alcalins sont par exemple décrites dans le brevet belge BE-A-817 696. Des émulsions d'alkyltrialcoxysilane sont par exemple décrites dans DE-A-3 751 514.

- EXEMPLES 1 A 3 :

On découpe à la scie circulaire en acier, à partir de blocs de pierres calcaires provenant de trois carrières différentes, des éprouvettes qui sont des parallélépipèdes rectangles de 10 x 20 x 2,5 cm dont les porosités sont les suivantes :

```
- pierre de Saint Vaast  (exemple 1)    : 42 %
- pierre de Massangis    (exemple 2)    : 13 %
- pierre de Savonnière   (exemple 3)    : 27 %
```

La scie utilisée présente une lame circulaire de 30 cm de diamètre, entraînée à 3 000 tours par minute au moyen d'un moteur électrique.

On fait couler sur la lame durant l'opération de sciage 400 litres d'eau à l'heure, cette eau ayant été au préalable dopée par deux litres d'émulsion de résine silicone hydrofugeante ayant la composition suivante :
- résine méthyle : 40 % en poids {résine provenant de l'hydrolyse dans l'éther isopropylique du mélange de méthylchlorosilanes suivants : $CH_3SiCl_3$ (67 % en poids) ; $(CH_3)_2SiCl_2$ (22 % en poids) et $(CH_3)_3SiCl$ (11 % en poids)},

- alcool polyvinylique :     2 % en poids,
- propylèneglycol :     2 % en poids,
- eau :     56 % en poids

Les éprouvettes sont pesées immédiatement après la découpe puis après séchage 15 jours à température ambiante et à l'air libre. La différence de poids entre les deux pesées donne la quantité d'eau absorbée qui permet de calculer la quantité Q (en g/m²) d'extraits secs de résine silicone absorbée par les éprouvettes. Q est donc calculée en g par m² de surface d'éprouvette engendrée par la découpe des blocs de pierre de départ.

On apprécie l'hydrofugation au moyen du test d'absorption d'eau à la pipe. Ce test consiste à placer sur l'éprouvette une pipe en verre, c'est-à-dire un tube cylindrique gradué ouvert à ses deux extrémités, de 26 mm de diamètre et présentant une hauteur d'eau de 92 mm ou de 200mm. L'ouverture de la pipe en contact avec la surface de l'éprouvette est munie d'un joint torique élastomère d'étanchéité.

On mesure le volume en ml $V_{92}$ ou $V_{200}$ d'eau absorbée par l'éprouvette à compter de la fin de la cinquième minute et jusqu'à la fin de la quinzième minute, décomptées à partir du moment où l'on met la pipe au niveau 0 (92 ou 200 mm de hauteur d'eau). Le volume V est désigné par $V_{92}$ ou $V_{200}$ selon que l'on a utilisé respectivement une pipe de 92 mm ou de 200 mm de hauteur d'eau.

Les résultats obtenus sont rassemblés dans le tableau ci-après où sont indiqué les valeurs de Q et de $V_{92}$ ou $V_{200}$ obtenues.

3

EP 0 362 084 B1

- <u>EXEMPLES COMPARATIFS 4C A 6C</u> :

On effectue exactement les mêmes opérations qu'aux exemples 1 à 3 sauf que l'eau de refroidissement de la scie est exempte d'émulsion silicone.

Les résultats obtenus sont rassemblés dans le tableau ci-après.

- <u>EXEMPLES COMPARATIFS 7C A 9C</u> :

On effectue exactement les mêmes opérations qu'aux exemples 4C à 6C, sauf que les éprouvettes sciées sont séchées 15 jours à l'air libre et à température ambiante, sont hydrofugées par l'eau de refroidissement de la scie utilisée aux exemples 1 à 3 et donc dopée par l'émulsion silicone. L'eau dopée est passée au pinceau sur les éprouvettes jusqu'à ce que la même quantité Q de résine silicone que celle déposée respectivement aux exemples 1 à 3, soit obtenue. Cette enduction au pinceau est longue et nécessite environ 30 minutes pour aboutir aux quantités Q visées.

Les résultats obtenus sont rassemblés dans le tableau ci-après :

<div align="center">TABLEAU</div>

| EXEMPLES | 1 | 2 | 3 | 4C | 5C | 6C | 7C | 8C | 9C |
|---|---|---|---|---|---|---|---|---|---|
| Q (g/m2 | 8 | 2,5 | 5 | 0 | 0 | 0 | 8 | 2,5 | 5 |
| V92 (ml) | 4,2 | 0 | – | 30 | 0,35 | – | 25 | 0,35 | – |
| V200 (ml) | – | – | 0,4 | – | – | 1,8 | – | – | 1,3 |

**Revendications**

1. Procédé d'hydrofugation de matériaux extraits de carrière obtenus par sciage selon lequel on découpe les matériaux avec introduction d'eau, dans la zone de découpe, caractérisé en ce que l'eau comporte une quantité efficace d'une émulsion silicone hydrofugeante.

2. Procédé selon la revendication 1, caractérisé en ce que la quantité d'emulsion est telle que l'on dépose de 1 à 50 g de silicone, calculés en extraits secs, par m$^2$ de surface de matériaux.

3. Procédé selon la revendication 1, caractérisé en ce que l'on utilise de 0,1 à 10 parties en poids d'émulsion silicone comportant de 5 à 60% en poids d'extraits secs de silicone, pour 100 parties d'eau.

4. Procédé selon l'une quelconque des revendications précédentes, caractérisé en ce que l'émulsion silicone est choisie parmi les émulsions de résines silicones, les émulsions organosiliconates de métaux alcalins, les émulsions d'alkyltrialcoxysilanes et les émulsions de polydiorganosiloxanes éventuellement porteurs de radicaux organiques fonctionnels.

5. Procédé selon l'une quelconque des revendications précédentes, caractérisé en ce que les matériaux de carrière sont choisi parmi les pierres, le marbre et l'ardoise.

**Patentansprüche**

1. Verfahren, um aus einem Steinbruch geförderte, durch Sägen erhaltene Materialien wasserabstoßend

<div align="center">4</div>

zu machen, bei dem man die Materialien unter Einbringen von Wasser in die Zone des Schnittvorgangs schneidet, dadurch gekennzeichnet, daß das Wasser eine wirksame Menge einer wasserabweisenden Siliconemulsion enthält.

2. Verfahren gemäß Anspruch 1, dadurch gekennzeichnet, daß die Menge der Emulsion derart ist, daß man 1 bis 50 g Silicon, berechnet als Trockenextrakt, je m² Materialoberfläche aufbringt.

3. Verfahren gemäß Anspruch 1, dadurch gekennzeichnet, daß man 0,1 bis 10 Gew.Teile einer Siliconemulsion verwendet, die 5 bis 60 Gew.% Silicontrockenextrakt je 100 Teile Wasser enthält.

4. Verfahren gemäß einem der vorhergehenden Ansprüche, dadurch gekennzeichnet, daß die Siliconemulsion unter den Emulsionen von Siliconharzen, den Alkalimetallorganosiliconat-Emulsionen, den Emulsionen von Alkyltrialkoxysilanen und den Emulsionen von Polydiorganosiloxanen, die gegebenenfalls funktionelle organische Reste tragen, ausgewählt wird.

5. Verfahren gemäß einem der vorhergehenden Ansprüche, dadurch gekennzeichnet, daß die Steinbruchmaterialien unter Stein, Marmor und Schiefer ausgewählt sind.

## Claims

1. Process for waterproofing quarried materials obtained by sawing, according to which materials are cut up with the introduction of water into the cutting region, characterised in that the water contains an effective quantity of a waterproofing silicone emulsion.

2. Process according to claim 1, characterised in that the quantity of emulsion is such that from 1 to 50 g of silicone, calculated as solids content, is deposited per m² of surface area of materials.

3. Process according to claim 1, characterised in that from 0.1 to 10 parts by weight of silicone emulsion containing from 5 to 60 % by weight of silicone solids are employed per 100 parts of water.

4. Process according to any one of the preceding claims, characterised in that the silicone emulsion is chosen from silicone resin emulsions, emulsions of alkali metal organosiliconates, alkyltrialkoxysilane emulsions and emulsions of polydiorganosiloxanes optionally carrying organic functional radicals.

5. Process according to any one of the preceding claims, characterised in that the quarried materials are chosen from stones, marble and slate.